# EUROPÄISCHE PATENTSCHRIFT

(11) **EP 3 393 843 B1**
(45) Veröffentlichungstag und Bekanntmachung des Hinweises auf die Patenterteilung: **17.07.2019**
(21) Anmeldenummer: 16819904.0
(22) Anmeldetag: 20.12.2016
(51) Int. Cl.: B60K 37/06

(54) **FAHRZEUG MIT EINER BILDERFASSUNGSEINHEIT UND EINEM BEDIENSYSTEM ZUM BEDIENEN VON EINRICHTUNGEN DES FAHRZEUGS SOWIE VERFAHREN ZUM BETREIBEN DES BEDIENSYSTEMS**
VEHICLE WITH AN IMAGE CAPTURING UNIT AND AN OPERATING SYSTEM FOR OPERATING DEVICES OF THE VEHICLE AND METHOD FOR OPERATING THE OPERATING SYSTEM
VÉHICULE MUNI D'UNE UNITÉ D'ACQUISITION D'IMAGES ET D'UN SYSTÈME D'ACTIONNEMENT SERVANT À ACTIONNER LES DISPOSITIFS DU VÉHICULE ET PROCÉDÉ SERVANT À FAIRE FONCTIONNER LE SYSTÈME D'ACTIONNEMENT

(30) Priorität: 22.12.2015 DE 102015122602
(43) Veröffentlichungstag der Anmeldung: 31.10.2018
(73) Patentinhaber: Volkswagen Aktiengesellschaft, 38440 Wolfsburg (DE)
(72) Erfinder: KASSNER, Astrid, 10117 Berlin (DE); KÖTTER, Nils, 38118 Braunschweig (DE)
(74) Vertreter: Reitstötter Kinzebach
(86) Internationale Anmeldenummer: PCT/EP2016/082022
(87) Internationale Veröffentlichungsnummer: WO 2017/108855

(56) Entgegenhaltungen:
- DE-A1-102012 010 044
- US-A1- 2014 267 688

## Beschreibung

Die vorliegende Erfindung betrifft ein Fahrzeug mit einer Bilderfassungseinheit, zumindest einer ersten und einer zweiten Einrichtung sowie einem Bediensystem zum Bedienen der Einrichtungen. Die Erfindung betrifft ferner ein Verfahren zum Betreiben eines Bediensystems zum Bedienen zumindest einer ersten und einer zweiten Einrichtung eines Fahrzeugs.

In einem Fahrzeug, insbesondere in einem Kraftfahrzeug, ist eine Vielzahl von elektronischen Einrichtungen vorgesehen, deren Bedienung dem Fahrer oder einem anderen Fahrzeuginsassen ermöglicht werden muss. Zu diesen Einrichtungen gehören beispielsweise ein Navigationssystem, eine Vielzahl von Fahrerassistenzsystemen sowie Kommunikations- und Multimediaanwendungen, die zum Beispiel eine Telefonanlage und Einrichtungen zur Wiedergabe von Multimediainhalten umfassen, beispielsweise ein Radio oder einen CD-Spieler.

Um die vielfältigen Einrichtungen im Fahrzeug bedienen zu können, werden in Fahrzeugen vielfach Multifunktionsbediensysteme eingesetzt, welche eine oder mehrere Funktionsanzeigen und Bedienelemente umfassen, mit denen die vielfältigen Einrichtungen des Fahrzeugs bedient werden können. Die Bedienung wird dabei durch die auf der Funktionsanzeige wiedergegebene Information unterstützt bzw. geführt. Ferner kann über das Bediensystem ausgewählt werden, welche Informationen auf der Multifunktionsanzeige angezeigt werden sollen.

Es ist dabei in Fahrzeugen von besonderer Bedeutung, dass die Bedienung einfach, schnell und intuitiv erfolgen kann. Auf diese Weise wird sichergestellt, dass der Nutzer, insbesondere der Fahrer, möglichst wenig Aufmerksamkeit auf die Bedienung verwenden muss. Dies ist bei einer Gestaltung der Funktionsanzeige so wie der Anordnung von Bedienelementen innerhalb des Fahrzeugs zu beachten. Da in vielen Fällen die Komplexität von flexiblen Funktionsanzeigen, etwa mit einem Touchscreen, zu komplexen Bedienoberflächen führt, werden typischerweise bestimmte Funktionen in Fahrzeugen weiterhin mittels analoger Schalter und Regler realisiert, wobei insbesondere einzelne Funktionen einer festen Position im Fahrzeug zugeordnet sind.

Die US 8,332,093 B2 beschreibt eine virtuelle Bedienoberfläche für ein Fahrzeug, wobei auf einem Bildschirm eine Darstellung des Fahrzeugs dargestellt wird, wobei diese Ansicht etwa durch Rotation verändert werden kann. Es können Bedienfelder angezeigt werden, durch deren Betätigung ein Aktuator bedient wird, etwa um eine Tür zu öffnen.

Die gattungsbildende US 2014/267688 A1 beschreibt ein Anzeigesystem, durch das beim Rangieren eine Übersichtsdarstellung eines Fahrzeugs und eines Anhängers ausgegeben wird. Dabei wird erkannt, ob der Anhänger mit dem System kompatibel ist und ob der Nutzer einen Park-Modus aktiviert hat. Ferner wird eine Kalibration des Systems mittels eines Setup-Menüs beschrieben. Schließlich beschreibt die DE 10 2012 010 044 A1 eine Vorrichtung und ein Verfahren zur Steuerung einer Beleuchtung in einem Fahrzeuginnenraum, bei denen ein Fahrzeuginnenraum zusammen mit Symbolen für Lichtquellen dargestellt wird. Anhand der Lichtquellensymbole kann die Beleuchtungsstärke der zugeordneten Lichtquelle eingestellt werden.

Der vorliegenden Erfindung liegt die Aufgabe zugrunde, ein Fahrzeug und ein Verfahren der eingangs genannten Art bereitzustellen, die eine schnelle und einfache Bedienung von Einrichtungen in einem Fahrzeug erlauben.

Erfindungsgemäß wird diese Aufgabe durch ein Fahrzeug mit den Merkmalen des Anspruchs 1 und durch ein Verfahren mit den Merkmalen des Anspruchs 13 gelöst. Vorteilhafte Ausgestaltungen und Weiterbildungen ergeben sich aus den abhängigen Ansprüchen.

Das erfindungsgemäße Fahrzeug umfasst eine Bilderfassungseinheit, zumindest eine erste und eine zweite Einrichtung sowie ein Bediensystem zum Bedienen der Einrichtungen. Dabei umfasst das Bediensystem eine Erfassungseinheit, durch die zu einem Zeitpunkt zumindest ein erster oder ein zweiter Fahrzustand des Fahrzeugs erfassbar ist. Das Bediensystem umfasst ferner eine Steuereinheit, die mit der Erfassungseinheit gekoppelt ist und durch die in Abhängigkeit von dem erfassten Fahrzustand die erste oder zweite Einrichtung auswählbar ist und eine graphische Bedienoberfläche für die ausgewählte Einrichtung erzeugbar ist. Es umfasst ferner eine Aus- und Eingabeeinheit, die mit der Steuereinheit gekoppelt ist und die eine Anzeigefläche mit zumindest einem ersten und einem zweiten Bereich umfasst. Dabei ist durch den ersten Bereich der Anzeigefläche die erzeugte graphische Bedienoberfläche für die ausgewählte Einrichtung ausgebbar, wobei der erste Bereich eine berührungsempfindliche Oberfläche aufweist, durch welche eine Benutzereingabe erfassbar ist. Durch den zweiten Bereich der Anzeigefläche sind Bilddaten der Bilderfassungseinheit des Fahrzeugs anzeigbar. Dabei ist anhand der erfassten Nutzereingabe ein Steuersignal erzeugbar und an die ausgewählte Einrichtung des Fahrzeugs übertragbar.

Durch das erfindungsgemäße Verfahren kann vorteilhafterweise eine Aus- und Eingabeeinheit in Abhängigkeit von einem Fahrzustand kontextsensitiv für verschiedene Einrichtungen genutzt werden. Zudem kann eine effiziente Nutzung der Bauteile für verschiedene Funktionen erreicht werden. Es kann ferner die Komplexität der benutzerangezeigten Bedienung reduziert werden, wodurch weniger Aufmerksamkeit des Nutzers beansprucht wird. Die Aus- und Eingabeeinheit kann ferner durch eine Unterteilung in zwei Bereiche gleichzeitig zur Anzeige von Bilddaten einer Bilderfassungseinheit genutzt werden und eine situationsbezogene Bedienoberfläche ausgeben.

Die Erfassungseinheit kann den Fahrzustand anhand verschiedener Parameter des Fahrzeugs erfassen, beispielsweise anhand der Geschwindigkeit, Beschleunigung, Position und/oder einer Betriebsart des Fahrzeugs. Ferner kann der Fahrzustand anhand einer Nutzereingabe erfasst werden. Der Nutzer kann beispielsweise manuell zwischen verschiedenen Fahrzuständen umschalten. Anhand des erfassten Fahrzustands wird bestimmt, welche Einrichtung des Fahrzeugs ausgewählt werden soll. Insbesondere kann dabei berücksichtigt werden, dass bei verschiedenen Fahrzuständen spezifische Einrichtungen des Fahrzeugs bedienbar sein sollen, beispielsweise die Türen bei einem parkenden Fahrzeug oder eine Beleuchtungseinrichtung während einer Fahrt des Fahrzeugs. Zur Bedienung der ausgewählten Einrichtung wird eine Bedienoberfläche erzeugt und durch die Ein- und Ausgabevorrichtung ausgegeben.

Unter einer "Bedienoberfläche" wird erfindungsgemäß eine Mensch-Maschine-Schnittstelle verstanden. Insbesondere ist eine graphische Bedienoberfläche vorgesehen, die graphische Objekte umfasst und durch eine Anzeigevorrichtung angezeigt wird. Die graphischen Objekte der graphischen Bedienoberfläche können bedienbar sein und/oder der Informationsanzeige dienen. Bedienbare Objekte können ausgewählt und betätigt werden, wobei eine dem bedienbaren Objekt zugeordnete Funktion ausgeführt wird. Beispielsweise kann die Informationsanzeige verändert werden, ferner können Nutzereingaben für den Objekten zugeordnete Einrichtungen des Fahrzeugs erfasst werden. Ferner können weitere Eingaben erfasst werden, etwa anhand eines Eingabefeldes für eine Eingabe von Text oder anderen Zeichen. Die Bedienung der Bedienoberfläche erfolgt anhand an sich bekannter Verfahren, etwa mittels eines Touchscreen, eines Dreh-Drück-Stellers, einer Maus oder eines Touchpads oder anderer Eingabemittel. Die Bedienung kann ferner mittels Gesten oder Sprachsteuerung erfolgen.

Die Ausgabe der Bedienoberfläche durch die Aus- und Eingabeeinheit erfolgt in einem ersten Bereich der Aus- und Eingabeeinheit. Dieser erste Bereich weist eine berührungsempfindliche Oberfläche auf, durch welche Nutzereingaben erfassbar sind. Die Nutzereingaben können ferner durch andere Eingabemittel eingegeben werden, beispielsweise durch einen Dreh-Drück-Steller, eine Maus oder ein Touchpad. Die Anzeigefläche der Aus- und Eingabeeinheit umfasst ferner einen zweiten Bereich, durch den Bilddaten einer Bilderfassungseinheit des Fahrzeugs anzeigbar sind. Die Bilddaten können auf an sich bekannte Weise erfasst werden, beispielsweise durch ein Kamerasystem.

Anhand der erfassten Nutzereingabe kann nun die ausgewählte Einrichtung gesteuert werden, wobei ein Steuersignal erzeugt und an die Einrichtung übertragen wird.

Bei einer Ausbildung des erfindungsgemäßen Fahrzeugs umfasst die graphische Bedienoberfläche Bedienelemente, und die Nutzereingabe ist anhand einer mit einem Betätigungsobjekt ausgeführten Bediengeste, insbesondere einer Tippgeste oder einer Wischgeste, erfassbar. Dabei ist die Bediengeste anhand zumindest eines der Bedienelemente ausführbar. Dadurch kann vorteilhafterweise eine dem Nutzer vertraute Bedienung der Bedienoberfläche erreicht werden, um die ausgewählte Einrichtung des Fahrzeugs des Fahrzeugs zu bedienen.

Beim Ausführen einer Bediengeste anhand eines Bedienelements können an sich bekannte Verfahren genutzt werden, beispielsweise indem durch Tippen auf der berührungsempfindlichen Oberfläche an einer Position, die einem Bedienelement zugeordnet ist, dieses Bedienelement ausgewählt wird oder indem anhand der Anfangs- und Endposition einer Wischgeste eine Verschiebung eines Bedienobjekts ausgeführt wird.

Bei einer weiteren Ausbildung ist die Aus- und Eingabeeinheit in einem Innenraum des Fahrzeugs in einem äußeren Bereich auf der Fahrerseite angeordnet. Die Aus- und Eingabeeinheit ist dadurch einfach für den Fahrer zu erreichen und kann besonders bequem bedient werden.

Bei einer Weiterbildung ist zumindest eine der Einrichtungen relativ zum Fahrer auf der gleichen Seite angeordnet wie die Aus- und Eingabeeinheit. Dies erlaubt vorteilhafterweise eine räumliche Zuordnung der Aus- und Eingabeeinheit zu der Einrichtung des Fahrzeugs. Der Nutzer erkennt intuitiv, dass eine Nutzereingabe eine Einrichtung in direktem räumlichen Zusammenhang mit der Aus- und Eingabeeinheit bedient. Der räumliche Zusammenhang kann dabei in einer besonderen räumlichen Nähe zwischen der Aus- und Eingabeeinheit und der Einrichtung bestehen, aber auch in der Anordnung der Einrichtung relativ zum Fahrer.

Bei einer Ausbildung umfasst zumindest eine der Einrichtungen einen Aktuator. Dadurch können vorteilhafterweise durch die Aus- und Eingabeeinheit Aktuatoren des Fahrzeugs gesteuert werden. Durch Aktuatoren im Sinne der Erfindung werden physikalische Größen durch eine elektrische Steuerung verändert, beispielsweise wird eine mechanische Bewegung durchgeführt, etwa bei einer Tür- und Klappenöffnung oder einem Fensterheber.

Bei einer weiteren Ausbildung wird, wenn das Fahrzeug fährt, der erste Fahrzustand erfasst und, wenn das Fahrzeug steht, der zweite Fahrzustand erfasst. Dadurch können vorteilhafterweise grundlegende Fahrzustände unterschieden werden. Die Auswahl der Einrichtung des Fahrzeugs anhand des Fahrzustands kann daher so erfolgen, dass kontextsensitiv eine Einrichtung ausgewählt wird, die in dem jeweiligen Fahrzustand mit hoher Wahrscheinlichkeit bedient werden soll.

Bei einer Weiterbildung umfasst die Einrichtung, die in dem zweiten Fahrzustand auswählbar ist, eine Fahrzeugtür. Insbesondere umfasst die Fahrzeugtür eine Vorrichtung zum Öffnen und Schließen. Dadurch kann vorteilhafterweise die Fahrzeugtür bedient werden, zum Beispiel wenn das Fahrzeug steht.

Bei einer weiteren Ausbildung umfasst die Nutzereingabe, wenn die ausgewählte Einrichtung die Fahrzeugtür umfasst, eine Bewegungsrichtung, und die Fahrzeugtür ist in Abhängigkeit von der Bewegungsrichtung steuerbar. Insbesondere umfasst die Nutzereingabe eine Wischgeste. Dadurch kann vorteilhafterweise durch eine einfache Nutzereingabe die Fahrzeugtür gesteuert werden.

Bei einer Weiterbildung umfasst die Einrichtung, die in dem ersten Fahrzustand auswählbar ist, eine Beleuchtungsvorrichtung des Fahrzeugs. Insbesondere umfasst die Einrichtung eine Ambientebeleuchtung. Dadurch kann vorteilhafterweise, zum Beispiel wenn das Fahrzeug fährt, eine Beleuchtung gesteuert werden, insbesondere eine Ambiente- oder Innenraumbeleuchtung.

Bei einer Ausbildung umfasst die Bilderfassungseinheit des Fahrzeugs einen digitalen Außenspiegel. Dadurch kann vorteilhafterweise durch den zweiten Bereich eine Anzeige zur Verfügung gestellt werden, die dem Nutzer Bilddaten des digitalen Außenspiegels zur Verfügung stellt. Der digitale Außenspiegel kann eine Kameravorrichtung umfassen, durch die Bilddaten in einer Umgebung des Fahrzeugs erfasst werden, insbesondere in einer seitlichen Umgebung des Fahrzeugs.

Bei einer weiteren Ausbildung umfasst die graphische Bedienoberfläche statische Bedienelemente, und die statischen Bedienelemente sind unabhängig von dem erfassten Fahrzustand erzeugbar. Dadurch können Bedienelemente angezeigt werden, die für den Nutzer unabhängig von dem Fahrzustand von Interesse sind, beispielsweise Bedienelemente zur Steuerung einer Scheinwerferanlage des Fahrzeugs.

Bei einer Weiterbildung ist durch die statischen Bedienelemente eine Scheinwerfereinrichtung des Fahrzeugs bedienbar. So werden vorteilhafterweise Funktionen durch die Aus- und Eingabeeinheit bedienbar, die typischerweise als physische Schaltelemente im Bereich des Fahrers angeordnet werden. Dies ermöglicht eine Flexibilisierung und Reduktion der zu bedienenden Bedienelemente.

Bei dem Verfahren der eingangs genannten Art umfasst das Fahrzeug ferner eine Bilderfassungseinheit und eine Aus- und Eingabeeinheit, wobei die Aus- und Eingabeeinheit eine Anzeigefläche mit zumindest einem ersten und einem zweiten Bereich umfasst. Dabei weist der erste Bereich eine berührungsempfindliche Oberfläche auf. Zu einem Zeitpunkt wird zumindest ein erster oder ein zweiter Fahrzustand des Fahrzeugs erfasst. In Abhängigkeit von dem erfassten Fahrzustand wird die erste oder zweite Einrichtung ausgewählt und eine graphische Bedienoberfläche für die ausgewählte Einrichtung erzeugt. Dabei wird durch den ersten Bereich der Anzeigefläche die erzeugte graphische Bedienoberfläche für die ausgewählte Einrichtung ausgegeben und es wird durch die berührungsempfindliche Oberfläche des ersten Bereichs eine Nutzereingabe erfasst. Durch den zweiten Bereich der Anzeigefläche werden Bilddaten der Bilderfassungseinheit des Fahrzeugs angezeigt. Dabei wird anhand der erfassten Nutzereingabe ein Steuersignal erzeugt und an die ausgewählte Einrichtung des Fahrzeugs übertragen.

Das erfindungsgemäße Fahrzeug ist insbesondere ausgebildet, das erfindungsgemäße Verfahren zu implementieren. Das Verfahren weist somit dieselben Vorteile auf wie das erfindungsgemäße Fahrzeug.

Bei einer Ausbildung des erfindungsgemäßen Verfahrens werden durch die Bilderfassungseinheit des Fahrzeugs Bilddaten eines digitalen Außenspiegels der Fahrzeugs erfasst. Dadurch werden in dem zweiten Bereich der Anzeigefläche relevante Bilddaten insbesondere für den Fahrer ausgegeben.

Bei einer weiteren Ausbildung umfasst die ausgewählte Einrichtung eine Fahrzeugtür, und die Nutzereingabe umfasst eine Bewegungsrichtung, wobei die Fahrzeugtür in Abhängigkeit von der Bewegungsrichtung gesteuert wird. Dadurch kann die Aus- und Eingabeeinheit genutzt werden, um die Fahrzeugtür zu steuern.

Ferner kann eine Nutzereingabe erfasst werden und der Fahrzustand kann anhand der Nutzereingabe erfasst werden. Beispielsweise kann dabei vorgesehen sein, dass durch eine Nutzereingabe zwischen verschiedenen Fahrzuständen umgeschaltet wird. Dadurch kann der Nutzer vorteilhafterweise manuell den Fahrzustand einstellen und etwa die Bildung der Bedienoberfläche beeinflussen.

Die Erfindung wird nun anhand von Ausführungsbeispielen mit Bezug zu den Zeichnungen erläutert.
- Figur 1: zeigt ein Ausführungsbeispiel des erfindungsgemäßen Fahrzeugs,
- Figur 2: zeigt ein Ausführungsbeispiel einer bei dem erfindungsgemäßen Verfahren erzeugten Anzeige,
- Figur 3: zeigt das Erfassen des Fahrzustands anhand einer Nutzereingabe und
- Figuren 4A bis 4C: zeigen eine Bedienung für das erfindungsgemäße Verfahren.

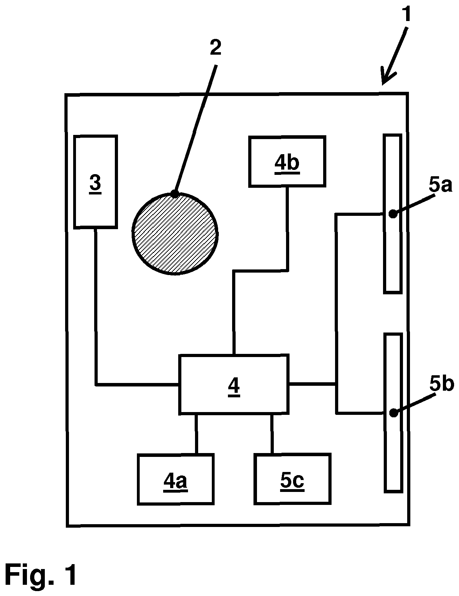

Mit Bezug zu Figur 1 wird ein Ausführungsbeispiel des erfindungsgemäßen Fahrzeugs erläutert.

In einem Fahrzeug 1 befindet sich ein Fahrer 2 auf einem vorne links im Fahrzeug 1 angeordneten Fahrzeugsitz. In weiteren Ausführungsbeispielen kann sich der Fahrer 2 an anderen Positionen im Fahrzeug 1 befinden, insbesondere abhängig von verkehrsrechtlichen Bedingungen.

Das Fahrzeug 1 umfasst eine Steuereinheit 4, mit der eine Aus- und Eingabeeinheit 3 gekoppelt ist. Die Aus- und Eingabeeinheit 3 ist links seitlich neben der Position des Fahrzeugsitzes, auf dem sich der Fahrer 2 des Fahrzeugs 1 befindet, angeordnet. Insbesondere kann die Position, an der die Aus- und Eingabeeinheit 3 angeordnet ist, variieren, es ist allerdings eine Position in einem äußeren Bereich auf der Fahrerseite des Fahrzeugs 1 vorgesehen, wobei die Fahrerseite insbesondere durch verkehrsrechtliche Bedingungen bestimmt wird. In dem dargestellten Ausführungsbeispiel befindet sich die Aus- und Eingabeeinheit 3 links unten relativ zu einem vor dem Fahrer 2 angeordneten Lenkrad im Fahrzeug 1.

Mit der Steuereinheit 4 ist ferner eine Erfassungseinheit 4a sowie eine Bilderfassungseinheit 4b gekoppelt. In dem dargestellten Beispiel umfasst die Bilderfassungseinheit 4b einen digitalen Außenspiegel 4b. Insbesondere werden durch den digitalen Außenspiegel 4b Bilddaten seitlich neben dem Fahrzeug erfasst und an die Steuereinheit 4 übertragen, wobei die Bilddaten insbesondere einen Bereich auf der Fahrerseite und einem rückwärtigen Bereich relativ zum Fahrzeug 1 umfassen.

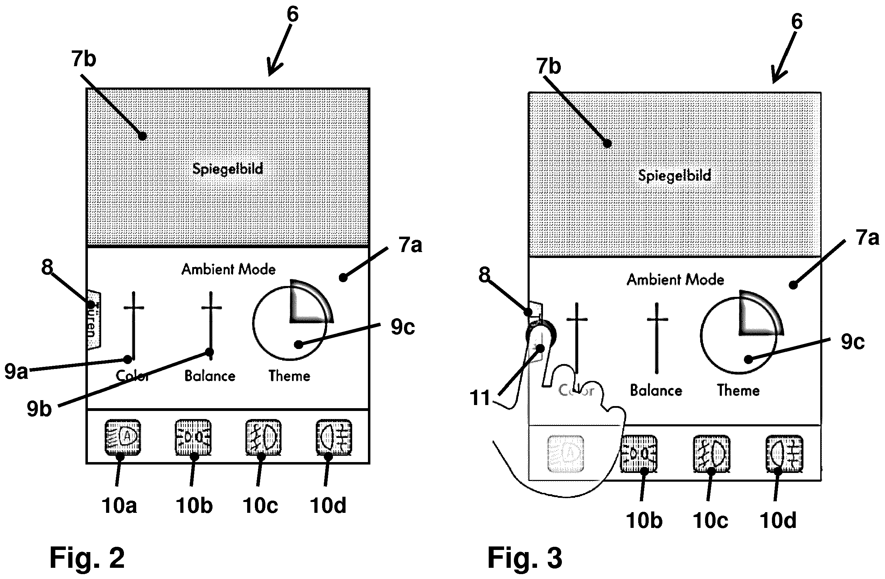

Ferner sind Einrichtungen 5a, 5b, 5c mit der Steuereinheit 4 gekoppelt, insbesondere zwei Fahrzeugtüren 5a und 5b sowie eine Beleuchtungseinrichtung 5c, im dargestellten Beispiel eine Ambientebeleuchtung 5c. Die Einrichtungen 5a, 5b, 5c des Fahrzeugs 1 können alternativ oder zusätzlich andere Einrichtungen des Fahrzeugs 1 umfassen, die eine Schnittstelle zum Bedienen der jeweiligen Einrichtung 5a, 5b, 5c aufweisen. Mit Bezug zu den Figuren 1 und 2 wird ein Ausführungsbeispiel des erfindungsgemäßen Verfahrens erläutert. Dabei wird von dem oben mit Bezug zu Figur 1 erläuterten erfindungsgemäßen System ausgegangen.

Durch die Erfassungseinheit 4a wird zu einem Zeitpunkt erfasst, ob sich das Fahrzeug 1 in einem ersten oder in einem zweiten Fahrzustand befindet. Dabei wird in dem Ausführungsbeispiel der erste Fahrzustand erfasst, wenn das Fahrzeug fährt. Der zweite Fahrzustand wird erfasst, wenn das Fahrzeug steht. In weiteren Ausführungsbeispielen können die Fahrzustände anders definiert sein bzw. es können mehr als zwei Fahrzustände definiert sein. Der Fahrzustand des Fahrzeugs 1 wird insbesondere anhand von Parametern des Fahrzeugs 1 erfasst, beispielsweise anhand der Geschwindigkeit, der Position und/oder einer Beschleunigung des Fahrzeugs 1. Der Fahrzustand kann ferner durch eine Nutzereingabe erfasst werden, beispielsweise kann der Nutzer durch Betätigen eines Betätigungsobjekts zwischen verschiedenen Fahrzuständen umschalten.

Es wird nun abhängig von dem erfassten Fahrzustand eine Einrichtung 5a, 5b, 5c ausgewählt. Für diese ausgewählte Einrichtung 5a, 5b, 5c wird eine graphische Bedienoberfläche erzeugt und an die Aus- und Eingabeeinheit 3 übertragen. Die Ausgabe der graphischen Bedienoberfläche durch die Aus- und Eingabeeinheit 3 erfolgt in einem ersten Bereich 7a einer Anzeigefläche 6 der Aus- und Eingabeeinheit 3. Dabei umfasst die Anzeigefläche 6 ferner einen zweiten Bereich 7b, in dem in dem dargestellten Ausführungsbeispiel Bilddaten ausgegeben werden, die durch den digitalen Außenspiegel 4b erfasst wurden.

Die Aus- und Eingabeeinheit 3 weist in dem ersten Bereich 7a der Anzeigefläche 6 eine berührungsempfindliche Oberfläche auf. Es wird somit ein sogenannter Touchscreen bereitgestellt. Beispielsweise kann eine Folie über der Anzeigefläche 6 angeordnet sein, mit welcher die Position einer Berührung eines Betätigungsobjekts detektiert werden kann. Bei dem Betätigungsobjekt handelt es sich insbesondere um die Fingerspitze eines Nutzers. Die Folie kann zum Beispiel als resistive Touchfolie, kapazitive Touchfolie oder piezoelektrische Folie ausgebildet sein. Ferner kann die Folie so ausgebildet sein, dass ein Wärmestrom, der zum Beispiel von der Fingerspitze eines Nutzers ausgeht, gemessen wird. Aus der zeitlichen Entwicklung der Berührung der Folie lassen sich verschiedene Eingaben gewinnen.

Beispielsweise kann im einfachsten Fall das Berühren der Folie bei einer bestimmten Position erfasst und einem auf der Anzeigefläche 6 angezeigten graphischen Objekt, beispielsweise einem Bedienobjekt der graphischen Bedienoberfläche zugeordnet werden. Des Weiteren kann die Dauer der Berührung bei einer bestimmten Position oder innerhalb eines bestimmten Bereichs erfasst werden. Ferner können Gesten erfasst werden, wobei der zeitliche Verlauf der Position einer fortdauernden Berührung der berührungsempfindlichen Oberfläche erfasst und ausgewertet wird.

Mit Bezug zu Figur 2 wird ein Ausführungsbeispiel einer bei dem erfindungsgemäßen Verfahren erzeugten Anzeige dargestellt. Es wird dabei von dem oben mit Bezug zu Figur 1 erläuterten erfindungsgemäßen Fahrzeug 1 ausgegangen.

Bei dem in Figur 2 dargestellten Fall wurde der erste Fahrzustand des Fahrzeugs 1 erfasst, das heißt, das Fahrzeug 1 fährt gerade. In diesem Ausführungsbeispiel ist diesem ersten Fahrzustand die Ambientebeleuchtung 5c als Einrichtung des Fahrzeugs 1 zugeordnet. Es wird daher eine graphische Bedienoberfläche für die Ambientebeleuchtung 5c erzeugt und in dem ersten Bereich 7a der Anzeigefläche 6 ausgegeben. Die graphische Bedienoberfläche umfasst Bedienelemente 9a, 9b, 9c, in dem dargestellten Beispiel ein Farbregler 9a, ein Balance-Regler 9b und ein Element 9c zur Auswahl einer Voreinstellung. Es wird nun eine Nutzereingabe erfasst, insbesondere berührt der Fahrer 2 den Touchscreen im ersten Bereich 7a an einer bestimmten Position und es wird anhand der Position und der Bedienelemente 9a, 9b, 9c eine Funktion der Ambientebeleuchtung 9c ausgeführt.

In dem dargestellten Ausführungsbeispiel umfasst der erste Bereich 7a ferner statische Bedienelemente 10a bis 10d zur Steuerung von Scheinwerfern des Fahrzeugs 1. Die statischen Bedienelemente 10a bis 10d werden unabhängig vom erfassten Fahrzustand angezeigt, hier beispielhaft am unteren Rand der Anzeigefläche 6. Insbesondere ersetzen die statischen Bedienelemente 10a bis 10d analoge oder physisch an festen Stellen im Fahrzeug angeordnete Schaltelemente. In einem weiteren Ausführungsbeispiel werden die statischen Bedienelemente 10a bis 10d lediglich in einem Fahrzustand oder bei einer Teilmenge von mehreren Fahrzuständen in der graphischen Bedienoberfläche angezeigt.

Die graphische Bedienoberfläche umfasst ferner eine Schaltfläche 8 mit der Aufschrift "Türen". Diese Schaltfläche erlaubt in dem Ausführungsbeispiel eine Nutzereingabe, durch die der erfasste Fahrzustand verändert werden kann.

Erfindungsgemäß erfolgt in dem zweiten Bereich 7b der Anzeigefläche 6 eine Ausgabe von Bilddaten unabhängig von dem Fahrzustand. In dem Ausführungsbeispiel ist dies eine Ausgabe des digitalen Außenspiegels 4b. Die Ausgabe dieser Bilddaten ist sicherheitsrelevant und soll in diesem Fall nicht verändert werden. In weiteren Ausführungsbeispielen kann allerdings vorgesehen sein, dass auch hier eine von dem Fahrzustand abhängige Anzeige erzeugt wird.

Mit Bezug zu Figur 3 wird das Erfassen des Fahrzustands anhand einer Nutzereingabe erläutert. Dabei wird von dem in oben mit Bezug zu den Figuren 1 und 2 erläuterten erfindungsgemäßen System und Verfahren ausgegangen.

Bei dem in Figur 3 dargestellten Fall wurde das erfindungsgemäße Verfahren wie bereits oben erläutert ausgeführt und es wird eine graphische Bedienoberfläche für die Ambientebeleuchtung 5c des Fahrzeugs 1 dargestellt. Der Fahrer 2 betätigt nun mit dem Finger seiner Hand 11 die Schaltfläche 8 im ersten Bereich 7a der Anzeigefläche 6 der Aus- und Eingabeeinheit 3. Diese Berührung wird erfasst und es wird ein Signal erzeugt, durch das ein anderer Fahrzustand aktiviert wird, in dem dargestellten Beispiel der zweite Fahrzustand, der normalerweise beim Stillstand des Fahrzeugs 1 erfasst wird.

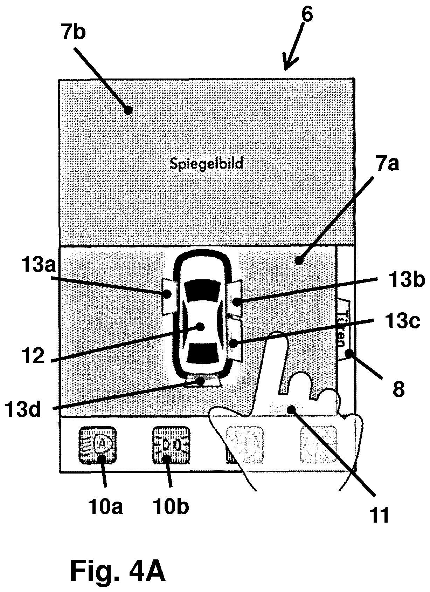

Mit Bezug zu den Figuren 4A bis 4C wird eine Bedienung des erfindungsgemäßen Fahrzeugs 1 dargestellt. Dabei wird von dem oben mit Bezug zu den Figuren 1 bis 3 dargestellten erfindungsgemäßen Fahrzeug 1 und Verfahren ausgegangen.

Bei dem dargestellten Fall wurde der zweite Fahrmodus erfasst, das heißt, das Fahrzeug 1 befindet sich im Stillstand oder der zweite Fahrmodus wurde anhand einer Nutzereingabe erfasst. In diesem Fall wird die graphische Bedienoberfläche so erzeugt, dass durch sie die Fahrzeugtüren 5a und 5b bedient werden können. In dem dargestellten Beispiel sind ferner weitere Türen und die Kofferraumklappe bedienbar. Dazu umfasst die graphische Bedienoberfläche eine Fahrzeugdarstellung 12, an der ferner Bedienelemente 13a bis 13d angeordnet sind, wobei die räumliche Anordnung der Bedienelemente 13a bis 13d der räumlichen Anordnung der Fahrzeugtüren 5a, 5b entspricht.

Die graphische Bedienoberfläche umfasst ferner wie in dem mit Bezug zu den Figuren 2 und 3 erläuterten Fall, die statischen Bedienelemente 10a-d für die Scheinwerfer des Fahrzeugs 1.

Durch Berühren eines Bedienelements 13a-d der graphischen Bedienoberfläche mit einem Finger der Hand 11 kann der Fahrer 2 eine zu bedienende Fahrzeugtür 5a, 5b auswählen.

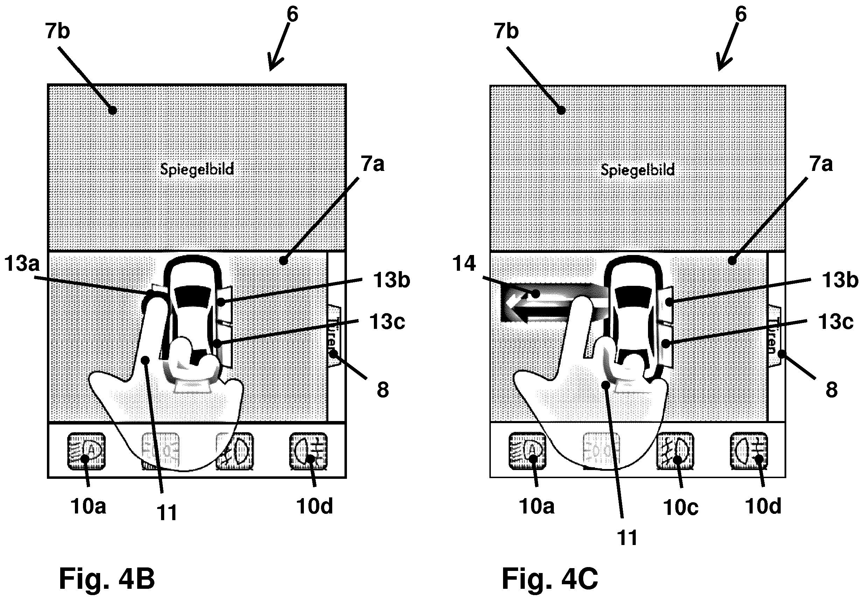

Durch eine Wischgeste, hier entlang des in Figur 4C dargestellten Pfeils 14, kann der Nutzer die ausgewählte Fahrzeugtür 5a, 5b öffnen. Die Bediengeste 14 zum Öffnen der Tür umfasst in diesem Beispiel ein Ziehen von der in Figur 4B dargestellten ursprünglichen Position des Bedienelements 13a weg von der Fahrzeugdarstellung 12. Analog dazu kann ein Schließen einer Tür durch eine Bewegung im Wesentlichen in umgekehrter Richtung des Pfeils 14 erfolgen, das heißt, durch eine Wischgeste zum Fahrzeug hin.

In weiteren Ausführungsbeispielen können andere Einrichtungen 5a, 5b, 5c des Fahrzeugs 1 durch die graphische Bedienoberfläche gesteuert werden, wobei insbesondere Einrichtungen mit räumlichem Bezug zur Anordnung der Aus- und Eingabeeinheit 3 im Fahrzeug gesteuert werden können, beispielsweise ein Außenspiegel auf der entsprechenden Seite. Der räumliche Bezug der zu steuernden Einrichtung 5a, 5b, 5c kann auch dadurch entstehen, dass bei herkömmlichen Fahrzeugen die entsprechende Einrichtung 5a, 5b, 5c typischerweise in einem Bereich außen auf der Fahrerseite bedienbar ist. Beispielsweise ist der Fahrer 2 typischerweise damit vertraut, dass Funktionen der Scheinwerfer des Fahrzeugs 1 durch ein Bedienelement auf der Instrumententafel links neben dem Lenkrad bedienbar sind. In diesem Fall stellt der Fahrer 2 intuitiv eine räumliche Zuordnung zu den bedienbaren Einrichtungen 5a, 5b, 5c her und kann die entsprechenden Bedienmöglichkeiten bei der Aus- und Eingabeeinheit 3 auf der gleichen Seite des Fahrzeugs 1 orten.

Ferner kann die Umschaltung zwischen den verschiedenen Fahrzuständen des Fahrzeugs 1 in weiteren Ausführungsbeispielen auf andere Weise und anhand anderer Parameter des Fahrzeugs erfolgen. Insbesondere wird die zumindest eine in einem Fahrzustand bedienbare Einrichtung 5a, 5b, 5c des Fahrzeugs 1 anhand des Fahrzustands so ausgewählt, dass durch die Aus- und Eingabeeinheit 3 relevante Einrichtungen 5a, 5b, 5c des Fahrzeugs 1 bedienbar sind, wobei gleichzeitig eine zu komplexe Anzeige von nicht relevanten Einrichtungen 5a, 5b, 5c vermieden wird.

Die graphische Bedienoberfläche umfasst in dem dargestellten Ausführungsbeispiel ferner die Schaltfläche 8 mit der Aufschrift "Türen", wobei durch Betätigen der Schaltfläche 8 in diesem Fall der Fahrmodus zum ersten Fahrmodus umgeschaltet werden kann. In diesem Fall wird wieder eine Anzeige erzeugt, wie sie beispielhaft in den Figuren 2 und 3 dargestellt ist.

In einem weiteren Ausführungsbeispiel kann der Wechsel des Fahrmodus anhand einer Nutzereingabe nur für eine Teilmenge der Fahrzustände des Fahrzeugs 1 erfolgen.

Insbesondere kann dadurch vermieden werden, dass sicherheitsrelevante Einschränkungen der Bedienbarkeit bei bestimmten Fahrzuständen durch eine Nutzereingabe verändert werden.

### Bezugszeichenliste

- 1: Fahrzeug
- 2: Fahrer
- 3: Aus- und Eingabeeinheit
- 4: Steuereinheit
- 4a: Erfassungseinheit
- 4b: Bilderfassungseinheit; digitaler Außenspiegel
- 5a, 5b: Fahrzeugtüren
- 5c: Beleuchtungseinrichtung; Ambientebeleuchtung
- 6: Anzeigefläche
- 7a: Erster Bereich
- 7b: Zweiter Bereich; Außenspiegelanzeige
- 8: Schaltfläche "Türen"
- 9a, 9b, 9c: Bedienelemente "Ambientebeleuchtung"
- 10a, 10b, 10c, 10d: Statische Bedienelemente "Licht"
- 11: Hand
- 12: Fahrzeugdarstellung
- 13a, 13b, 13c, 13d: Bedienelemente "Klappenöffnung"
- 14: Pfeil, Bediengeste

## Patentansprüche

1. Fahrzeug (1) mit einer Bilderfassungseinheit (4b), zumindest einer ersten und einer zweiten Einrichtung (5a, 5b, 5c) sowie einem Bediensystem zum Bedienen der Einrichtungen (5a, 5b, 5c); wobei
das Bediensystem umfasst:
- eine Erfassungseinheit (4a), durch die zu einem Zeitpunkt zumindest ein erster oder ein zweiter Fahrzustand des Fahrzeugs (1) erfassbar ist; und
- eine Steuereinheit (4), die mit der Erfassungseinheit (4a) gekoppelt ist,
**dadurch gekennzeichnet, dass**
- durch die Steuereinheit (4) in Abhängigkeit von dem erfassten Fahrzustand die erste oder zweite Einrichtung (5a, 5b, 5c) auswählbar ist und eine graphische Bedienoberfläche für die ausgewählte Einrichtung (5a, 5b, 5c) erzeugbar ist; und
- eine Aus- und Eingabeeinheit (3), die mit der Steuereinheit (4) gekoppelt ist und die eine Anzeigefläche (6) mit zumindest einem ersten (7a) und einem zweiten Bereich (7b) umfasst, wobei
- durch den ersten Bereich (7a) der Anzeigefläche (6) die erzeugte graphische Bedienoberfläche für die ausgewählte Einrichtung (5a, 5b, 5c) ausgebbar ist, wobei der erste Bereich (7a) eine berührungsempfindliche Oberfläche aufweist, durch welche eine Nutzereingabe erfassbar ist, und
- durch den zweiten Bereich (7b) der Anzeigefläche (6) Bilddaten der Bilderfassungseinheit (4b) des Fahrzeugs (1) anzeigbar sind; wobei anhand der erfassten Nutzereingabe ein Steuersignal erzeugbar und an die ausgewählte Einrichtung (5a, 5b, 5c) des Fahrzeugs (1) übertragbar ist.

2. Fahrzeug (1) gemäß Anspruch 1,
**dadurch gekennzeichnet, dass**
die graphische Bedienoberfläche Bedienelemente (9a, 9b, 9c, 10a, 10b, 10c, 10d, 13a, 13b, 13c, 13d) umfasst und die Nutzereingabe anhand einer mit einem Betätigungsobjekt (11) ausgeführten Bediengeste (14), insbesondere einer Tippgeste oder einer Wischgeste, erfassbar ist, wobei die Bediengeste (14) anhand zumindest eines der Bedienelemente (9a, 9b, 9c, 10a, 10b, 10c, 10d, 13a, 13b, 13c, 13d) ausführbar ist.

3. Fahrzeug (1) gemäß Anspruch 1 oder 2,
**dadurch gekennzeichnet, dass**
die Aus- und Eingabeeinheit (3) in einem Innenraum des Fahrzeugs (1) in einem äußeren Bereich auf einer Fahrerseite angeordnet ist.

4. Fahrzeug (1) gemäß einem der vorhergehenden Ansprüche,
**dadurch gekennzeichnet, dass**
zumindest eine der Einrichtungen (5a, 5b, 5c) relativ zum Fahrer auf der gleichen Seite angeordnet ist wie die Aus- und Eingabeeinheit (3).

5. Fahrzeug (1) gemäß einem der vorhergehenden Ansprüche,
**dadurch gekennzeichnet, dass**
zumindest eine der Einrichtungen (5a, 5b, 5c) einen Aktuator umfasst.

6. Fahrzeug (1) gemäß einem der vorhergehenden Ansprüche,
**dadurch gekennzeichnet, dass**,
wenn das Fahrzeug fährt, der erste Fahrzustand erfasst wird und, wenn das Fahrzeug steht, der zweite Fahrzustand erfasst wird.

7. Fahrzeug (1) gemäß einem der vorhergehenden Ansprüche,
**dadurch gekennzeichnet, dass**
die Einrichtung (5a, 5b, 5c), die in dem zweiten Fahrzustand auswählbar ist, eine Fahrzeugtür (5a, 5b) des Fahrzeugs (1) umfasst.

8. Fahrzeug (1) gemäß Anspruch 7,
**dadurch gekennzeichnet, dass**,
wenn die ausgewählte Einrichtung (5a, 5b, 5c) die Fahrzeugtür (5a, 5b) umfasst, die Nutzereingabe eine Bewegungsrichtung umfasst und die Fahrzeugtür in Abhängigkeit von der Bewegungsrichtung steuerbar ist.

9. Fahrzeug (1) gemäß einem der vorhergehenden Ansprüche,
**dadurch gekennzeichnet, dass**
die Einrichtung (5a, 5b, 5c), die in dem ersten Fahrzustand auswählbar ist, eine Beleuchtungsvorrichtung (5c) des Fahrzeugs (1) umfasst.

10. Fahrzeug (1) gemäß einem der vorhergehenden Ansprüche,
**dadurch gekennzeichnet, dass**
die Bilderfassungseinheit (4b) des Fahrzeugs (1) einen digitalen Außenspiegel (4b) umfasst.

11. Fahrzeug (1) gemäß einem der vorhergehenden Ansprüche,
**dadurch gekennzeichnet, dass**
die graphische Bedienoberfläche statische Bedienelemente (10a, 10b, 10c, 10d) umfasst und die statischen Bedienelemente (10a, 10b, 10c, 10d) unabhängig von dem erfassten Fahrzustand erzeugbar sind.

12. Fahrzeug (1) gemäß Anspruch 10,
**dadurch gekennzeichnet, dass**
durch die statischen Bedienelemente eine Scheinwerfereinrichtung des Fahrzeugs (1) bedienbar ist.

13. Verfahren zum Betreiben eines Bediensystems zum Bedienen zumindest einer ersten und einer zweiten Einrichtung (5a, 5b, 5c) eines Fahrzeugs (1); wobei
das Fahrzeug (1) ferner eine Bilderfassungseinheit (4b) und eine Aus- und Eingabeeinheit (3) umfasst, wobei die Aus- und Eingabeeinheit (3) eine Anzeigefläche (6) mit zumindest einem ersten (7a) und einem zweiten Bereich (7b) umfasst, wobei der erste Bereich (7a) eine berührungsempfindliche Oberfläche aufweist; wobei bei dem Verfahren
zu einem Zeitpunkt zumindest ein erster oder ein zweiter Fahrzustand des Fahrzeugs (1) erfasst wird;
**dadurch gekennzeichnet, dass**
in Abhängigkeit von dem erfassten Fahrzustand die erste oder zweite Einrichtung (5a, 5b, 5c) ausgewählt wird und eine graphische Bedienoberfläche für die ausgewählte Einrichtung (5a, 5b, 5c) erzeugt wird; wobei
durch den ersten Bereich (7a) der Anzeigefläche (6) die erzeugte graphische Bedienoberfläche für die ausgewählte Einrichtung (5a, 5b, 5c) ausgegeben wird und durch die berührungsempfindliche Oberfläche des ersten Bereichs (7a) eine Nutzereingabe erfasst wird; und
durch den zweiten Bereich (7b) der Anzeigefläche (6) Bilddaten der Bilderfassungseinheit (4b) des Fahrzeugs (1) angezeigt werden; wobei
anhand der erfassten Nutzereingabe ein Steuersignal erzeugt und an die ausgewählte Einrichtung (5a, 5b, 5c) des Fahrzeugs (1) übertragen wird.

14. Verfahren gemäß Anspruch 13,
**dadurch gekennzeichnet, dass**
durch die Bilderfassungseinheit (4b) des Fahrzeugs (1) Bilddaten eines digitalen Außenspiegels (4b) des Fahrzeugs (1) erfasst werden.

15. Verfahren gemäß Anspruch 13 oder 14,
**dadurch gekennzeichnet, dass**
die ausgewählte Einrichtung (5a, 5b, 5c) eine Fahrzeugtür (5a, 5b) umfasst und die Nutzereingabe eine Bewegungsrichtung umfasst, wobei die Fahrzeugtür in Abhängigkeit von der Bewegungsrichtung gesteuert wird.

## Claims

1. A vehicle (1) with an image capturing unit (4b), at least one first and one second device (5a, 5b, 5c) and an operating system for operating the devices (5a, 5b, 5c), wherein
the operating system comprises:
- a detection unit (4a), by means of which at least one first or one second driving state of the vehicle (1) can be detected at a point in time, and
- a control unit (4) which is coupled to the detection unit (4a),
**characterized in that**
- by means of the control unit (4) the first or second device (5a, 5b, 5c) can be selected depending on the detected driving state and a graphic user interface can be generated for the selected device (5a, 5b, 5c); and
- an output and input unit (3), which is coupled to the control unit (4) and comprises a display surface (6) with at least one first (7a) and one second area (7b), wherein
- the generated user interface for the selected device (5a, 5b, 5c) can be output by the first area (7a) of the display surface (6), wherein the first area (7a) has a touch-sensitive surface by means of which a user input can be detected, and
- image data of the image capturing unit (4b) of the vehicle (1) can be displayed by the second area (7b) of the display surface (6); wherein based on the detected user input, a control signal can be generated and transmitted to the selected device (5a, 5b, 5c) of the vehicle (1).

2. A vehicle (1) according to Claim 1,
**characterized in that**
the graphic user interface comprises operating elements (9a, 9b, 9c, 10a, 10b, 10c, 10d, 13a, 13b, 13c, 13d) and the user input can be detected based on a control gesture (14) carried out with an actuation object (11), in particular a tap gesture or a swipe gesture, wherein the control gesture (14) can be executed based on at least one of the operating elements (9a, 9b, 9c, 10a, 10b, 10c, 10d, 13a, 13b, 13c, 13d).

3. A vehicle (1) according to Claim 1 or 2,
**characterized in that**
the output and input unit (3) is arranged in an interior space of the vehicle (1) in an outer area on a driver side.

4. A vehicle (1) according to any one of the preceding claims,
**characterized in that**
at least one of the devices (5a, 5b, 5c) is arranged relative to the driver on the same side as the output and input unit (3).

5. A vehicle (1) according to any one of the preceding claims,
**characterized in that**
at least one of the devices (5a, 5b, 5c) comprises an actuator.

6. A vehicle (1) according to any one of the preceding claims,
**characterized in that**
if the vehicle is driven, the first driving state is detected and, if the vehicle is stationary, the second driving state is detected.

7. A vehicle (1) according to any one of the preceding claims,
**characterized in that**
the device (5a, 5b, 5c), which can be selected in the second driving state, comprises a vehicle door (5a, 5b) of the vehicle (1).

8. A vehicle (1) according to Claim 7,
**characterized in that**
if the selected device (5a, 5b, 5c) comprises the vehicle door (5a, 5b), the user input comprises a direction of movement and the vehicle door is controllable depending on the direction of movement.

9. A vehicle (1) according to any one of the preceding claims,
**characterized in that**
a device (5a, 5b, 5c), which can be selected in the first driving state, comprises an illumination device (5c) of the vehicle (1).

10. A vehicle (1) according to any one of the preceding claims,
**characterized in that**
the image capturing unit (4b) of the vehicle (1) comprises a digital outside mirror (4b).

11. A vehicle (1) according to any one of the preceding claims,
**characterized in that**
the graphic user interface comprises static operating elements (10a, 10b, 10c 10d) and the static operating elements (10a, 10b, 10c, 10d) can be generated independently of the detected driving state.

12. A vehicle (1) according to Claim 10,
**characterized in that**
a headlamp device of the vehicle (1) can be operated by the static operating elements.

13. A method for operating an operating system for operating at least one first and one second device (5a, 5b, 5c) of a vehicle (1); wherein
the vehicle (1) also comprises an image capturing unit (4b) and an output and input unit (3), wherein the output and input unit (3) comprises a display surface (6) with at least one first (7a) and one second area (7b), wherein the first area (7a) has a touch-sensitive surface, wherein in the method at a point in time at least one first or one second driving state of the vehicle (1) is detected;
**characterized in that**
depending on the detected driving state the first or second device (5a, 5b, 5c) is selected and a graphic user interface is generated for the selected device (5a, 5b, 5c); wherein
the generated graphic user interface for the selected device (5a, 5b, 5c) is output by the first area (7a) of the display surface (6) and a user input is detected by the touch-sensitive surface of the first area (7a); and image data of the image capturing unit (4b) of the vehicle (1) are displayed by the second area (7b) of the display surface (6); wherein
based on the detected user input a control signal is generated and is transmitted to the selected device (5a, 5b, 5c) of the vehicle (1).

14. A method according to Claim 13,
**characterized in that**
image data of a digital outside mirror (4b) of the vehicle (1) are detected by the image capturing unit (4b) of the vehicle (1).

15. A method according to Claim 13 or 14,
**characterized in that**
the selected device (5a, 5b, 5c) comprises a vehicle door (5a, 5b) and the user input comprises the direction of movement, wherein the vehicle door is controlled depending on the direction of movement.

## Revendications

1. Véhicule (1) avec une unité de capture d'images (4b), au moins un premier et un deuxième dispositif (5a, 5b, 5c) ainsi qu'un système de commande pour la commande des dispositifs (5a, 5b, 5c) ;
le système de commande comprenant :
- une unité de mesure (4a), grâce à laquelle, à un moment, au moins un premier ou un deuxième état de conduite du véhicule (1) peut être mesuré ; et
- une unité de commande (4) qui est couplée avec l'unité de mesure (4a), **caractérisé en ce que**
- l'unité de commande (4) permet, en fonction de l'état de conduite mesuré, de sélectionner le premier ou le deuxième dispositif (5a, 5b, 5c) et de générer une interface utilisateur graphique pour le dispositif (5a, 5b, 5c) sélectionné ; et
- une unité de sortie et d'entrée (3), qui est couplée avec l'unité de commande (4) et qui comprend une surface d'affichage (6) avec au moins une première (7a) et une deuxième zone (7b),
- la première zone (7a) de la surface d'affichage (6) permettant de représenter l'interface utilisateur graphique pour le dispositif (5a, 5b, 5c) sélectionné, la première zone (7a) comprenant une surface tactile permettant de détecter une entrée utilisateur et
- la deuxième zone (7b) de la surface d'affichage (6) permettant d'afficher des données d'images de l'unité de capture d'imagess (4b) du véhicule (1) ;
moyennant quoi, à l'aide de l'entrée utilisateur détectée, un signal de commande peut être généré et transmis au dispositif (5a, 5b, 5c) sélectionné du véhicule (1).

2. Véhicule (1) selon la revendication 1,
**caractérisé en ce que**
l'interface utilisateur graphique comprend des éléments de commande (9a, 9b, 9c, 10a, 10b, 10c, 10d, 13a, 13b, 13c, 13d) et l'entrée utilisateur pouvant être détectée à l'aide d'un geste de commande (14) réalisé à l'aide d'un objet d'actionnement (11), plus particulièrement d'un geste de tapotement ou d'un geste d'effleurement, le geste de commande (14) pouvant être réalisé à l'aide d'au moins un des éléments de commande (9a, 9b, 9c, 10a, 10b, 10c, 10d, 13a, 13b, 13c, 13d).

3. Véhicule (1) selon la revendication 1 ou 2,
**caractérisé en ce que**
l'unité de sortie et d'entrée (3) est disposée dans un espace intérieur du véhicule (1) dans une zone extérieure sur un côté du conducteur.

4. Véhicule (1) selon l'une des revendications précédentes,
**caractérisé en ce que**
au moins un des dispositifs (5a, 5b, 5c) est disposé, par rapport au conducteur, sur le même côté que l'unité de sortie et d'entrée (3).

5. Véhicule (1) selon l'une des revendications précédentes,
**caractérisé en ce que**
au moins un des dispositifs (5a, 5b, 5c) comprend un actionneur.

6. Véhicule (1) selon l'une des revendications précédentes,
**caractérisé en ce que**
lorsque le véhicule se déplace, le premier état de conduite est détecté et, lorsque le véhicule est immobile, le deuxième état de conduite est détecté.

7. Véhicule (1) selon l'une des revendications précédentes,
**caractérisé en ce que**
le dispositif (5a, 5b, 5c), qui peut être sélectionné dans le deuxième état de conduite, comprend une portière (5a, 5b) du véhicule (1).

8. Véhicule (1) selon la revendication 7,
**caractérisé en ce que**
lorsque le dispositif (5a, 5b, 5c) sélectionné comprend la portière (5a, 5b), l'entrée utilisateur comprend une direction de mouvement et la portière peut être contrôlée en fonction de la direction de mouvement.

9. Véhicule (1) selon l'une des revendications précédentes,
**caractérisé en ce que**
le dispositif (5a, 5b, 5c), qui peut être sélectionné dans le premier état de conduite, comprend un dispositif d'éclairage (5c) du véhicule (1).

10. Véhicule (1) selon l'une des revendications précédentes,
**caractérisé en ce que**
l'unité de capture d'images (4b) du véhicule (1) comprend un miroir numérique externe (4b).

11. Véhicule (1) selon l'une des revendications précédentes,
**caractérisé en ce que**
l'interface utilisateur graphique comprend des éléments de commande statiques (10a, 10b, 10c, 10d) et les éléments de commande statiques (10a, 10b, 10c, 10d) peuvent être générés indépendamment de l'état de conduite détecté.

12. Véhicule (1) selon la revendication 10,
**caractérisé en ce que**
les éléments de commande statiques permettent de commander un dispositif de phares du véhicule (1).

13. Procédé de commande d'un système de commande pour la commande d'au moins un premier et un deuxième dispositif (5a, 5b, 5c) d'un véhicule (1) ;
le véhicule (1) comprenant en outre une unité de capture d'images (4b) et une unité de sortie et d'entrée (3), l'unité de sortie et d'entrée (3) comprenant une surface d'affichage (6) et au moins une première (7a) et une deuxième zone (7b), la première zone (7a) comprenant une surface tactile ; moyennant quoi, dans le procédé
à un moment, au moins un premier ou un deuxième état de conduite du véhicule (1) est détecté ;
**caractérisé en ce que**
en fonction de l'état de conduite détecté, le premier ou le deuxième dispositif (5a, 5b, 5c) est sélectionné et une interface utilisateur graphique est générée pour le dispositif (5a, 5b, 5c) sélectionné ;
la première zone (7a) de la surface d'affichage (6) permettant de représenter l'interface utilisateur graphique pour le dispositif (5a, 5b, 5c) sélectionné et la surface tactile de la première zone (7a) permettant de détecter une entrée utilisateur ; et
la deuxième zone (7b) de la surface d'affichage (6) permettant d'afficher des données d'images de l'unité de capture d'images (4b) du véhicule (1) ; et
à l'aide de l'entrée utilisateur détectée, un signal de commande est généré et transmis au dispositif (5a, 5b, 5c) sélectionné du véhicule (1).

14. Procédé selon la revendication 13,
**caractérisé en ce que**
l'unité de capture d'images (4b) du véhicule (1) permet de capturer des données d'images d'un miroir numérique externe (4b) du véhicule (1).

15. Procédé selon la revendication 13 ou 14,
**caractérisé en ce que**
le dispositif (5a, 5b, 5c) sélectionné comprend une portière (5a, 5b) et l'entrée utilisateur comprend une direction de mouvement, la portière étant contrôlée en fonction de la direction de mouvement.
